# EUROPÄISCHE PATENTSCHRIFT

(11) **EP 2 357 704 B1**
(45) Veröffentlichungstag und Bekanntmachung des Hinweises auf die Patenterteilung: **12.03.2014**
(21) Anmeldenummer: 11151074.9
(22) Anmeldetag: 17.01.2011
(51) Int. Cl.: H01M 8/12, B29C 45/26, B28B 1/24, B28B 7/34, H01M 8/00

(54) **Verfahren zur Herstellung einer SOFC Brennstoffzelle**
Method for producing an SOFC fuel cell
Procédé de fabrication d'une cellule de combustible SOFC

(30) Priorität: 19.01.2010 DE 102010001005
(43) Veröffentlichungstag der Anmeldung: 17.08.2011
(73) Patentinhaber: Robert Bosch GmbH, 70442 Stuttgart (DE)
(72) Erfinder: Maus, Harald, 71069, Sindelfingen (DE); Glanz, Uwe, 71679, Asperg (DE); Satet, Raphaelle, 5000 AM, Tilburg (NL); Oehler, Gudrun, 70435, Stuttgart (DE); Schwegler, Leonore, 70374, Stuttgart (DE); Hagemann, Benjamin, 70839, Gerlingen (DE); Bluthard, Alexander, 70469, Stuttgart (DE); Hirth, Erhard, 74248, Ellhofen (DE)

(56) Entgegenhaltungen:
- EP-A2- 0 932 214
- DE-T2- 60 123 840
- N. Stelzer, R. Zauner, W. Grienauer, L. Baca, u.a.: "Miniaturisierte keramische Hochtemperatur Brennstoffzellen Komponenten", www.fabrikderzukunft.at , 24. Januar 2007 (2007-01-24), Seiten 1-64, XP002630265, Gefunden im Internet: URL:http://www.fabrikderzukunft.at/nw_pdf/ 0669_brennstoffzellen.pdf [gefunden am 2011-03-28]

## Beschreibung

Die vorliegende Erfindung betrifft ein Verfahren zur Herstellung einer SOFC Brennstoffzelle mit einem Elektrolytkörper in tubularer Bauform, wobei auf dem Elektrolytkörper wenigstens eine innenseitige Elektrode und eine außenseitige Elektrode aufgebracht wird.

### Stand der Technik

Festoxid-Brennstoffzellen, so genannte SOFC Brennstoffzellen (Solid Oxide Fuel Cells) mit keramischem Elektrolytkörper bilden eine Hochtemperatur-Variante von Brennstoffzellen. Sie werden bei 600°C bis 1.000°C betrieben und liefern dabei höchste elektrische Wirkungsgrade von bis etwa 50%. Grundsätzlich werden SOFC Brennstoffzellen in zwei Hauptvarianten unterteilt: Eine Variante bildet eine röhrenförmige, tubulare Form des Elektrolytkörpers, die gemäß einer weiteren Variante gegen eine flache, planare Form abzugrenzen ist. Dabei ist es notwendig, im Verfahren zur Herstellung einer SOFC-Brennstoffzelle gemäß der tubularen Variante die innenseitige und außenseitige Elektrode auf die Wandung des Elektrolytkörpers aufzubringen. Dazu ist bekannt, die auf der Innenseite des Elektrolytkörpers angeordnete Elektrode, meist ausgeführt als die Anode, die mit Brenngas umspült wird, als Beschichtung auf der Innenwand des Elektrolytkörpers aufzubringen. Der Elektrolytkörper wird dabei vorzugsweise extrudiert oder, wie in EP 0 932 214 A2 offenbart, spritzgegossen.

Aus einem Bericht zur Energie- und Umweltforschung von N. Stelzer et al., mit dem Titel "Miniaturisierte keramische Hochtemperatur Brennstoffzellen Komponenten", sind bereits Forschungsergebnisse zur Herstellung von miniaturisierten oxidkeramischen Hochtemperatur Brennstoffzellen (SOFC) Komponenten bekannt. Wie in DE 601 23 840 T2 offenbart wird, können solche oxidkeramischen Komponenten im Allgemeinen als Oxidionen leitende Keramikmembranen verwendet werden.

Neben der Aufbringung der Elektroden auf den fertigen Elektrolytkörper werden zur Kontaktierung der Elektroden so genannte Interkonnektoren auf die Elektroden flächig aufgebracht, wobei die Aufbringung auf der Innenseite des Elektrolytkörpers häufig zu Problemen führt. Bekannt sind metallische Interkonnektoren, die aus einem hoch-chromhaltigen Werkstoff bestehen, um auf Grund der hohen Betriebstemperaturen eine hinreichende Korrosionsbeständigkeit kombiniert mit einer ausreichenden elektrischen Leitfähigkeit zu erhalten. Die im Betrieb der Brennstoffzelle entstehende Chromoxidschicht wirkt sich dabei negativ auf das Kathodenmaterial aus und kann zur vorzeitigen Alterung der Brennstoffzelle führen. Hingegen sind keramische Interkonnektoren zur elektrischen Kontaktierung der Elektroden zwar in der planaren Ausführung bekannt, finden für tubulare SOFC Brennstoffzellen bislang jedoch keine Anwendung. Auf Grund des großen Schlankheitsgrades der Elektrolytkörper ist die Aufbringung von keramischen Interkonnektoren auf der Innenwand des Elektrolytkörpers mit wesentlichen Problemen verbunden. Die Problematik ergibt sich insbesondere aus den geringen Wandstärken, da beispielsweise der Elektrolytkörper vorzugsweise eine Wandstärke von ca. 200 µm aufweist, wobei die poröse Anode auf der Innenseite des Elektrolytkörpers mit einer keramischen Interkonnektorschicht beschichtet werden muss. Aus Kostengründen müssen die Elektroden selbst ebenfalls dünn ausgeführt werden, die beispielsweise eine Dicke von 50 µm aufweisen. Darüber hinaus muss die Interkonnektorschicht ebenfalls hochporös sein, wobei eine über der Längserstreckung des Elektrolytkörpers sich ändernde Dicke des Interkonnektormaterials auf der Oberfläche des Elektrolytkörpers weitere Vorteile bietet.

Es ist daher die Aufgabe der vorliegenden Erfindung, die voranstehend genannten Nachteile zur Herstellung einer SOFC Brennstoffzelle zu überwinden und ein Verfahren bereitzustellen, einen Elektrolytkörper sowie auf der Innen- und/oder Außenseite des Elektrolytkörpers notwendige Elektroden und entsprechende Interkonnektorschichten auf einfache Weise herzustellen.

### Offenbarung der Erfindung

Diese Aufgabe wird ausgehend von einem Verfahren zur Herstellung einer SOFC Brennstoffzelle gemäß den Merkmalen des Anspruches 1 gelöst. Vorteilhafte Weiterbildungen der Erfindung sind in den abhängigen Ansprüchen angegeben.

Die Erfindung schließt die technische Lehre ein, dass das Verfahren zur Herstellung einer SOFC - Brennstoffzelle wenigstens die Schritte des Bereitstellens eines Spritzgusskerns umfasst, auf dem wenigstens ein Interkonnektormaterial und die innenseitige Elektrode aufgebracht wird, wobei das Verfahren ferner das Anordnen des Spritzgusskerns in einer Spritzgussform, das Spritzgießen einer Elektrolytmasse zur Bildung des Elektrolytkörpers und das Entfernen des Spritzgusskerns nach Art eines Gussverfahrens mit verlorenem Kern umfasst.

Die Erfindung geht dabei von dem Gedanken aus, dass zur Herstellung des Elektrolytkörpers ein Keramik-Spritzgussverfahren zur Anwendung kommt, wobei das Interkonnektormaterial und die innenseitige Elektrode schon im Spritzgussschritt derart angeordnet sind, dass dieses bzw. diese eine Verbindung mit dem Elektrolytkörper eingehen kann. Dabei wird ein Spritzgusskern in einer Spritzgussform zentrisch angeordnet, so dass sich ein rohrförmiger Hohlraum ergibt, in den die Elektrolytmasse eingespritzt wird, um den Elektrolytkörper zu bilden. Da sowohl das Interkonnektormaterial als auch die innenseitige Elektrode bereits auf dem Spritzgusskern aufgebracht sind, kann die Elektrolytmasse eine Verbindung mit der inneren Elektrode eingehen, so dass anschließend lediglich der Spritzgusskern aus dem Elektrolytkörper bzw. aus der innenseitigen Elektrode entfernt werden muss. Das Interkonnektormaterial wird vor dem Aufbringen des Materials zur Bildung der innenseitigen Elektrode auf den Spritzgusskern aufgebracht, so dass die Elektrolytmasse eine Verbindung mit dem Material der innenseitigen Elektrode eingehen kann.

Mit Vorteil kann der Spritzgusskern mittels eines thermischen Verfahrens und vorzugsweise mittels einer Schmelzkerntechnik entfernt werden, wenn der Spritzguss des Elektrolytkörpers erfolgt ist. Das Prinzip, die formgebenden Komponenten beim Gießen eines Werkstückes zum Entformen zu zerstören, wird als Verfahren mit verlorenem Kern bezeichnet, welches vorliegend Anwendung finden kann. Das thermische Entfernen des Spritzgusskerns kann während eines Sintervorganges erfolgen, dem der Elektrolytkörper mit dem Interkonnektormaterial und der innenseitigen Elektrode nach dem Spritzgussverfahren zugeführt wird.

Der Spritzgusskern kann vorteilhafterweise aus einem Kunststoffmaterial ausgebildet sein, wobei das thermische Verfahren zum Entfernen des Spritzgusskerns vorzugsweise durch ein Ausbrennen des Kunststoffmaterials aus dem Elektrolytkörper durchgeführt wird.

Der Spritzgusskern kann mit einer konischen Außenkontur ausgebildet sein, so dass ein erstes Ende mit einem großen Durchmesser und ein zweites Ende mit einem kleinen Durchmesser des Spritzgusskerns gebildet ist, wobei das zweite Ende mit dem kleinen Durchmesser die Seite des Elektrolytkörpers darstellt, die das Aufnahmeende des tubularen Elektrolytkörpers auf einem Grundkörper bildet. Wird nun das Interkonnektormaterial und/oder die innenseitige Elektrode mittels eines Druckverfahrens, insbesondere mittels eines Rollendruckverfahrens oder eines Siebdruckverfahrens, auf den Spritzgusskern aufgebracht, so kann die Aufbringung derart erfolgen, dass sich nach Aufbringen des Interkonnektormaterials und des Materials der innenseitigen Elektrode ein zylinderförmiger Gesamtkörper ergibt. Dadurch wird ein Bereich des Interkonnektormaterials geschaffen, der eine größere Wandstärke aufweist, wobei dieser Bereich zur späteren elektrischen Kontaktierung der innenseitigen Elektrode dient, weil am Kontaktende des Interkonnektormaterials die höchste Stromdichte vorherrscht. Folglich kann die Dicke des Interkonnektormaterials der Stromdichte über der Länge des Elektrolytkörpers angepasst werden.

Gemäß einer weiteren vorteilhaften Ausführungsform des erfindungsgemäßen Verfahrens wird das Interkonnektormaterial und/oder die innenseitige Elektrode auf einer Trägerfolie aufgebracht, die vor dem Spritzgießen der Elektrolytmasse auf dem Spritzgusskern angeordnet wird, so dass sich die Elektrolytmasse mit der innenseitigen Elektrode auf der Trägerfolie verbindet, wenn die Elektrolytmasse spritzgegossen wird.

Vorteilhafterweise kann eine Aufbringung des Interkonnektormaterials in Schichten auf die Trägerfolie erfolgen, wobei erst anschließend die innenseitige Elektrode aufgebracht wird. Werden die Schichten des Interkonnektormaterials unterschiedlich weit über der Länge des Spritzgusskerns aufgebracht, so werden freie Bereiche gebildet, die mit Füllschichten, insbesondere mit Glaskohleschichten, aufgefüllt werden können. Durch viele übereinander aufgebrachte Schichten mit unterschiedlicher Breite entsteht ein Interkonnektor mit einer variablen Dicke, die in Richtung zur Kontaktierung des Interkonnektors zunimmt, da hier die Stromdichte am höchsten ist. Der Elektrolytkörper kann über einen Flansch auf einem Grundkörper aufgenommen sein, über den die Kontaktierung des Interkonnektors erfolgt. Folglich werden in der Richtung mehr Schichten von Interkonnektormaterial auf die Trägerfolie aufgebracht, die bei Fertigstellung der Brennstoffzelle in Richtung zum Flansch und folglich in Richtung zur Kontaktierung weist. Um die freien Bereiche, die durch eine geringere Anzahl von aufgebrachten Schichten entsteht, aufzufüllen, können Füllschichten, insbesondere Glaskohleschichten, auf der Trägerfolie aufgebracht werden. Da auf der Trägerfolie zunächst nicht über der gesamten Länge entsprechend der Länge des Spritzgusskerns Schichten von Interkonnektormaterial aufgebracht werden, werden die Füllschichten benachbart zu den einzelnen Schichten des Interkonnektormaterials aufgebracht. Folglich kann eine nächste Schicht von Interkonnektormaterial auch über einer Füllschicht aufgebracht werden. Ist die Aufbringung der Schichten aus Interkonnektormaterial beendet, wird anschließend das Material zur Bildung der innenseitigen Elektrode aufgebracht.

Gemäß einer weiteren vorteilhaften Ausführungsform kann der Spritzgusskern Rillen aufweisen, in die das Interkonnektormaterial eingebracht wird, um eine Interkonnektorschicht zu bilden, die eine Struktur, vorzugsweise eine Stegstruktur oder eine Gitterstruktur, aufweist. Das Einbringen des Interkonnektormaterials in die Rillen der Spritzgussform kann beispielsweise mit einer Rakel erfolgen. Der Interkonnektor bildet folglich eine Matrixstruktur auf der Elektrode, um diese nicht vollständig zu überdecken. Vorteilhafterweise kann die Anzahl der Rillen über der Länge des Spritzgusskerns in der Struktur in einer Richtung erhöht werden, um in Richtung zur späteren Kontaktierung des Interkonnektors einen höheren Leitungsquerschnitt zu bilden, um der höheren Stromdichte gerecht zu werden.

Das Interkonnektormaterial kann im Bereich des ersten Endes mit einer kleinen Dicke und im Bereich des zweiten Endes mit einer großen Dicke aufgebracht werden, so dass das Interkonnektormaterial eine konische Innenform aufweist und die konische Form des Spritzgusskerns vorzugsweise derart ausgleicht, dass das Interkonnektormaterial eine etwa zylindrische Außenform aufweist. Dabei können die Rillen im Spritzgusskern auch eine unterschiedliche Tiefe aufweisen, die in Richtung zur späteren Kontaktierung des Innterkonnektors zunimmt.

Nach einem weiteren Verfahrensschritt kann nach dem Entformen des Elektrolytkörpers mit der innenseitigen Elektrode und dem Interkonnektormaterial die außenseitige Elektrode aufgebracht und nachfolgend vorzugsweise eingebrannt werden. Auch die außenseitige Elektrode kann mit einem Interkonnektormaterial versehen werden, das nach Entformen des Elektrolytkörpers aus der Spritzgussform aufgebracht werden kann, wobei die außenseitige Elektrode und ein außenseitig vorgesehener Interkonnektor auch auf gleiche Weise nach dem Prinzip der Folienhinterspritzung aufgebracht werden können, wie auf der Innenseite des Elektrolytkörpers. Insbesondere das Prinzip der Folienhinterspritzung kann sowohl aus Richtung des Spritzgusskerns als auch aus Richtung der Innenseite der Spritzgussform zum Spritzen des Elektrolytkörpers vorgesehen sein.

### Bevorzugtes Ausführungsbeispiel

Weitere, die Erfindung verbessernde Maßnahmen werden nachstehend gemeinsam mit der Beschreibung eines bevorzugten Ausführungsbeispieles der Erfindung anhand der Figuren näher dargestellt. Es zeigt:
- Figur 1: eine schematische Ansicht eines Ausführungsbeispieles der vorliegenden Erfindung,
- Figur 2: eine weitere Ansicht eines Ausführungsbeispieles der vorliegenden Erfindung mit einem konischen Spritzgusskern,
- Figur 3: eine schematische Ansicht einer schichtweisen Aufbringung von Interkonnektormaterial auf einer Trägerfolie,
- Figur 4: die schematische Ansicht einer Elektrode mit streifenförmig aufgebrachtem Interkonnektormaterial in einer Abwicklung,
- Figur 5: eine perspektivische Ansicht eines Elektrolytkörpers mit einer innenseitigen und einer außenseitigen Elektrode sowie jeweils aufgebrachtem Interkonnektormaterial,
- Figur 6a: ein Ausführungsbeispiel eines mit Rillen versehenen Spritzgusskerns,
- Figur 6b: der Spritzgusskern gemäß Figur 6a, wobei Interkonnektormaterial durch einen Rakelprozess in die Rillen des Spritzgusskerns eingebracht ist und
- Figur 6c: die Ansicht gemäß Figur 6b, wobei Material zur Bildung einer innenseitigen Elektrode außenseitig auf den Spritzgusskern und dem eingebrachten Interkonnektormaterial aufgetragen ist.

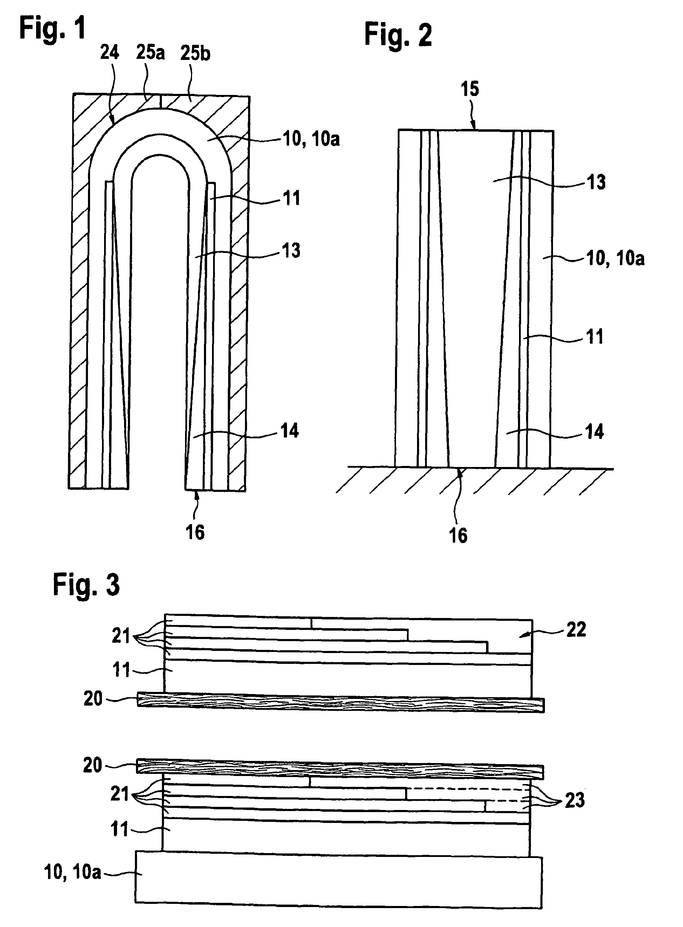

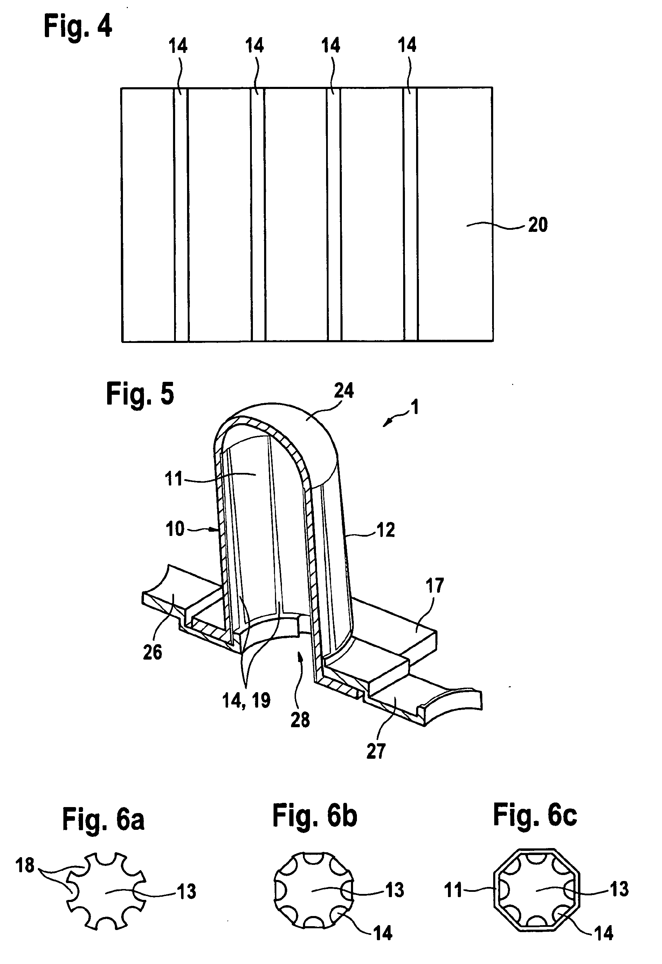

Figur 1 zeigt eine schematische Ansicht eines Ausführungsbeispiels des Verfahrens zur Herstellung einer SOFC Brennstoffzelle 1, wie diese in Figur 5 perspektivisch dargestellt ist. Figur 1 zeigt zunächst einen Querschnitt durch eine Spritzgussform, die eine erste Teilform 25a und eine zweite Teilform 25b aufweist. Die Teilformen 25a und 25b sind gegeneinander beweglich, und können zur Entformung eines spritzgegossenen Elektrolytkörpers 10 auseinander bewegt werden. Der Elektrolytkörper 10 ist als endseitig geschlossener Elektrolytkörper ausgebildet und weist daher eine Kappe 24 auf. Diese kann gemäß einer möglichen Ausführungsform zur Herstellung des Elektrolytkörpers 10 als ein Einzelteil ausgebildet sein, so dass der tubusartige, zylindrische Abschnitt des Elektrolytkörpers 10 durch Einspritzen einer Elektrolytmasse 10a in das Spritzgusswerkzeug hergestellt werden kann, wobei die Kappe 24 auch durch die Elektrolytmasse 10a selbst im Spritzguss hergestellt werden kann. Innenseitig weist die Spritzgussform einen Spritzgusskern 13 auf, der lediglich beispielhaft als Hohlkern dargestellt ist, um die durch ein Ausbrennen zu entfernende Masse des Spritzgusskernes 13 zu minimieren, wenn der Spritzgussprozess abgeschlossen ist. Außenseitig ist auf dem Spritzgusskern 13 zunächst ein Interkonnektormaterial 14 aufgebracht, wobei die Unterseite eine große Dicke aufweist, die in Richtung zur Kappe 24 des Elektrolytkörpers 10 abnimmt. Auf dem Interkonnektormaterial 14 ist eine innenseitige Elektrode 11 aufgebracht, die bei Einspritzen einer Elektrolytmasse 10 eine direkte Verbindung mit dieser eingeht. Wird der so gebildete Elektrolytkörper 10 aus der Spritzgussform entfernt und wird durch ein thermisches Verfahren der Spritzgusskern 13 aus der Innenseite des Elektrolytkörpers 10 vorzugsweise durch ein thermisches Verfahren entfernt, so ist ein Elektrolytkörper 10 mit einer innenseitigen Elektrode 11 und einem diese kontaktierenden Interkonnektormaterial 14 hergestellt. Gleichzeitig ist das Interkonnektormaterial 14 bereits am zweiten Ende 16 des Elektrolytkörpers 10 dicker, da an diesem Ende die spätere Kontaktierung stattfindet und somit einer höheren Stromdichte Rechnung getragen wird.

Figur 2 zeigt eine weitere Ansicht eines Ausführungsbeispieles der vorliegenden Erfindung mit einem konischen Spritzgusskern, wobei ein erstes Ende 15 mit einem großen Durchmesser und ein zweites Ende 16 mit einem kleinen Durchmesser des Spritzgusskerns 13 gebildet ist.

Figur 3 zeigt schematische Ansichten des Aufbaues der Beschichtungen auf einer Trägerfolie 20, wobei die Trägerfolie 20 in der oberen Darstellung an die innenseitige Elektrode 11 angrenzt, wohingegen die Trägerfolie 20 gemäß der unteren Darstellung an Schichten 21 von Interkonnektormaterial angrenzend dargestellt ist. Damit kann das Prinzip der Folienhinterspritzung umgesetzt werden, wobei die Folie mit dem Schichtaufbau auf den Spritzgusskern 13 angewendet wird.

Die Trägerfolie 20 wird gemäß der oberen Darstellung zunächst mit der innenseitigen Elektrode 11 beschichtet, wobei anschließend Schichten 21 von Interkonnektormaterial auf die innenseitige Elektrode 11 aufgebracht werden. Die Schichten 21 des Interkonnektormaterials sind in unterschiedlicher Erstreckung gezeigt, so dass ein freier Bereich 22 entsteht, der anschließend mit einer Füllschicht 23, beispielsweise aus Glaskohleschichten 23, aufgefüllt wird. Anschließend wird die Elektrolytmasse 10a zur Bildung des Elektrolytkörpers 10 angespritzt, derart, dass die Elektrolytmasse 10a eine feste, stoffschlüssige Verbindung mit der innenseitigen Elektrode 11 eingehen kann.

Die Trägerfolie 20 kann flächig ausgefüllt sein, so dass diese um den zylinderförmigen Spritzgusskern 13 herumgelegt werden kann. Besonders vorteilhaft ist es, wenn die Trägerfolie 20 hüllenartig oder schlauchartig vorgeformt ist, so dass die Hülle bzw. der Schlauch mit den aufgebrachten Schichten 11 und 21 bzw. 23 über den Spritzgusskern 13 gestülpt werden kann.

Die Trägerfolie 20 kann durch das auf den Spritzgussschritt folgende Entfernen des Spritzgusskerns 13 mittels eines thermischen Verfahrens ebenfalls mit entfernt werden. Im Ergebnis ergibt sich ein Elektrolytkörper 10 mit einer aufgebrachten innenseitigen Elektrode 11 und einem aus Schichten 21 gebildeten Interkonnektor. Um eine zylindrische Gesamtform zu erhalten, sind die Füllschichten 23 an den Stellen vorgesehen, die die ausbleibenden Schichtdicken der Schichten 21 vor dem Interkonnektormaterial auffüllen.

Figur 4 zeigt eine Abwicklung einer Trägerfolie 20, die auf der Oberseite bereits eine innenseitige Elektrode (11, nicht dargestellt) tragen kann. In einer Streifenform ist Interkonnektormaterial 14 aufgetragen, wobei sich die Streifen des Interkonnektormaterials 14 vorzugsweise in Längsrichtung des Elektrolytkörpers 10 und damit in Längsrichtung des Spritzgusskerns 13 erstrecken. Die Figur 4 zeigt eine Abwicklung in einer flächigen Darstellung, wobei die Trägerfolie 20 vorzugsweise eine Schlauchform mit einem kreisförmigen Querschnitt bilden kann. Die Streifen des Interkonnektormaterials verlaufen folglich in regelmäßigen Abständen zueinander in Längsrichtung des Elektrolytkörpers 10.

Figur 5 zeigt eine perspektivische Ansicht einer SOFC Brennstoffzelle 1. Diese weist einen Elektrolytkörper 10 auf, der die Grundstruktur der Brennstoffzelle 1 bildet und oberseitig durch eine Kappe 24 geschlossen ist, um die SOFC Brennstoffzelle 1 als endseitig geschlossene Brennstoffzelle auszuführen. Die SOFC Brennstoffzelle 1 ist auf einem Grundkörper 17 montiert, wobei zugleich Kontaktelemente 26 zur Kontaktierung der innenseitigen Elektrode 11 und ein Kontaktelement 27 zur Kontaktierung der außenseitigen Elektrode 12 gezeigt sind. Ferner ist sowohl innenseitig Interkonnektormaterial 14 gezeigt, die eine Stegstruktur 19 aufweist, die durch das Interkonnektormaterial 14 in Streifenform gebildet wird, wie dieses in Figur 4 dargestellt ist. Ebenfalls ist die außenseitige Elektrode 12 mit einer Stegstruktur gezeigt. Durch die geschlossene Bauweise der SOFC Brennstoffzelle 1 weist diese auf der Seite des Grundkörpers 17 eine Öffnung 28 für den Brenngaszustrom auf.

Figur 6a zeigt ein Ausführungsbeispiel eines Spritzgusskerns 13, der im Querschnitt dargestellt ist und Rillen 18 auf dem Umfang gleich verteilt aufweist. Gemäß Figur 6b ist erkennbar, dass die Rillen 18 mit Interkonnektormaterial 14 aufgefüllt werden können, wobei das Einbringen des Interkonnektormaterials 14 in die Rillen 18 beispielsweise mittels eines Rakelprozesses erfolgen kann. Gemäß Figur 6c ist dargestellt, dass nach Aufbringen des Interkonnektormaterials 14 die innenseitige Elektrode 11 beispielsweise mit einem Rollendruckverfahren oder einem Siebdruckverfahren aufgebracht worden ist. Damit stellt Figur 6c einen Spritzgusskern 13 mit der jeweiligen Beschichtung dar, die ohne das Prinzip der Folienhinterspritzung und folglich ohne eine Trägerfolie 20 ein Spritzgießen von Elektrolytmasse 10a in ein Werkzeug ermöglicht, wobei die Elektrolytmasse 10a eine stoffschlüssige Verbindung mit der innenseitigen Elektrode 11 eingehen kann. In einem nachfolgenden Brennprozess können sowohl der keramische Elektrolytkörper 10 als auch die jeweiligen Beschichtungen 11 und 14 eingebrannt und gehärtet werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktive Einzelheiten, räumliche Anordnungen und Verfahrensschritte, können sowohl für sich als auch in den verschiedensten Kombinationen erfindungswesentlich sein.

## Patentansprüche

1. Verfahren zur Herstellung einer SOFC Brennstoffzelle (1), aufweisend einen Elektrolytkörper (10) mit einer tubularen Struktur, wobei auf dem tubularen Elektrolytkörper wenigstens eine innenseitige Elektrode (11) und eine außenseitige Elektrode (12) aufgebracht wird, wobei das Verfahren wenigstens die folgenden Schritte aufweist:
- Bereitstellen eines Spritzgusskerns (13), auf dem wenigstens ein Interkonnektormaterial (14) und die innenseitige Elektrode (11) aufgebracht wird,
- Anordnen des Spritzgusskerns (13) in einer Spritzgussform (25a, 25b),
- Spritzgießen einer Elektrolytmasse (10a) zur Bildung des Elektrolytkörpers (10) und
- Entfernen des Spritzgusskerns (13) nach Art eines Gussverfahrens mit verlorenem Kern.

2. Verfahren nach Anspruch 1, **dadurch gekennzeichnet, dass** das Entfernen des Spritzgusskerns (13) mittels eines thermischen Verfahrens und vorzugsweise mittels einer Schmelzkerntechnik vorgenommen wird.

3. Verfahren nach Anspruch 1 oder 2, **dadurch gekennzeichnet, dass** der Spritzgusskern (13) aus einem Kunststoffmaterial ausgebildet ist, wobei das thermische Verfahren zum Entfernen des Spritzgusskerns (13) vorzugsweise durch ein Ausbrennen des Kunststoffmaterials durchgeführt wird.

4. Verfahren nach einem der Ansprüche 1 bis 3, **dadurch gekennzeichnet, dass** der Spritzgusskern (13) mit einer konischen Außenkontur ausgebildet ist, sodass ein erstes Ende (15) mit einem großen Durchmesser und ein zweites Ende (16) mit einem kleinen Durchmesser des Spritzgusskerns (13) gebildet ist, wobei das zweite Ende (16) mit dem kleinen Durchmesser das Aufnahmeende des tubularen Elektrolytkörpers (10) auf einem Grundkörper (17) bildet.

5. Verfahren nach einem der vorgenannten Ansprüche, **dadurch gekennzeichnet, dass** das Interkonnektormaterial (14) und/oder die innenseitige Elektrode (11) mittels eines Druckverfahrens, insbesondere mittels eines Rollendruckverfahrens oder eines Siebdruckverfahrens, auf den Spritzgusskern (13) aufgebracht wird.

6. Verfahren nach einem der Ansprüche 1 bis 4, **dadurch gekennzeichnet, dass** das Interkonnektormaterial (14) und/oder die innenseitige Elektrode (11) auf einer Trägerfolie (20) aufgebracht wird, die vor dem Spritzgießen der Elektrolytmasse (10a) auf dem Spritzgusskern (13) angeordnet wird, sodass sich die Elektrolytmasse (10a) mit der innenseitigen Elektrode (11) auf der Trägerfolie (20) verbindet, wenn die Elektrolytmasse (10a) spritzgegossen wird.

7. Verfahren nach Anspruch 6, **dadurch gekennzeichnet, dass** eine Aufbringung des Interkonnektormaterials (14) in Schichten (21) auf die Trägerfolie (20) erfolgt und anschließend die innenseitige Elektrode (11) aufgebracht wird, wobei sich die Schichten (21) des Interkonnektormaterials (14) vorzugsweise in Längsrichtung unterschiedlich weit über der Länge der des Spritzgusskerns (13) erstrecken und freie Bereiche (22) bilden.

8. Verfahren nach Anspruch 7, **dadurch gekennzeichnet, dass** die freien Bereiche (22) mit Füllschichten (23), insbesondere mit Glaskohleschichten (23) aufgefüllt werden.

9. Verfahren nach einem der vorgenannten Ansprüche, **dadurch gekennzeichnet, dass** der Spritzgusskern (13) Rillen (18) aufweist, in die das Interkonnektormaterial (14) eingebracht wird, um eine Interkonnektorschicht (14) zu bilden, die eine Struktur, vorzugsweise eine Stegstruktur (19) oder eine Gitterstruktur, aufweist.

10. Verfahren nach einem der vorgenannten Ansprüche, **dadurch**
**gekennzeichnet, dass** das Interkonnektormaterial (14) im Bereich des ersten Endes (15) mit einer kleinen Dicke und im Bereich des zweiten Endes (16) mit einer großen Dicke aufgebracht wird, sodass das Interkonnektormaterial (14) eine konische Innenform aufweist und die konische Form des Spritzgusskerns (13) vorzugsweise derart ausgleicht, dass das Interkonnektormaterial (14) eine etwa zylindrische Außenform aufweist.

11. Verfahren nach einem der vorgenannten Ansprüche, **dadurch gekennzeichnet, dass** nach dem Entformen des Elektrolytkörpers (10) mit der innenseitigen Elektrode (11) und dem Interkonnektormaterial (14) die außenseitige Elektrode (12) aufgebracht und nachfolgend vorzugsweise eingebrannt wird.

## Claims

1. Method for production of a solid oxide fuel cell (SOFC) (1), having an electrolyte body (10) with a tubular structure, wherein at least one internal electrode (11) and one external electrode (12) are applied to the tubular electrolyte body, with the method having at least the following steps:
- provision of an injection molding core (13) on which at least one interconnector material (14) and the internal electrode (11) are mounted,
- arrangement of the injection molding core (13) in an injection mold (25a, 25b),
- injection molding of an electrolyte compound (10a) in order to form the electrolyte body (10), and
- removal of the injection molding core (13) in the form of a casting process with a lost core.

2. Method according to Claim 1, **characterized in that** the injection molding core (13) is removed by means of a thermal process, and preferably by means of a lost core technique.

3. Method according to Claim 1 or 2, **characterized in that** the injection molding core (13) is formed from a plastic material, wherein the thermal process for removal of the injection molding core (13) is preferably carried out by burning out the plastic material.

4. Method according to one of Claims 1 to 3, **characterized in that** the injection molding core (13) is formed with a conical external contour, such that a first end (15) with a large diameter and a second end (16) with a small diameter of the injection molding core (13) are formed, wherein the second end (16) with the small diameter forms the holding end of the tubular electrolyte body (10) on a base body (17).

5. Method according to one of the abovementioned claims, **characterized in that** the interconnector material (14) and/or the internal electrode (11) are/is applied to the injection molding core (13) by means of a printing process, in particular by means of a web-fed printing process or a screen printing process.

6. Method according to one of Claims 1 to 4, **characterized in that** the interconnector material (14) and/or the internal electrode (11) are/is applied to a carrier film (20), which is arranged on the injection molding core (13) before the injection molding of the electrolyte compound (10a), such that the electrolyte compound (10a) is connected to the internal electrode (11) on the carrier film (20) when the electrolyte compound (10a) is injection molded.

7. Method according to Claim 6, **characterized in that** the interconnector material (14) is applied to the carrier film (20) in layers (21), and the internal electrode (11) is then applied, wherein the layers (21) of the interconnector material (14) preferably extend to a different width over the length of the injection molding core (13) in the longitudinal direction, and form free areas (22).

8. Method according to Claim 7, **characterized in that** the free areas (22) are filled with filling layers (23), in particular with glassy carbon layers (23).

9. Method according to one of the abovementioned claims, **characterized in that** the injection molding core (13) has grooves (18) into which the interconnector material (14) is introduced, in order to form an interconnector layer (14) which has a structure, preferably a web structure (19) or a grid structure.

10. Method according to one of the abovementioned claims, **characterized in that** the interconnector material (14) is applied with a small thickness in the area of the first end (15) and with a large thickness in the area of the second end (16), such that the interconnector material (14) has a conical internal shape, and preferably compensates for the conical shape of the injection molding core (13), such that the interconnector material (14) has an approximately cylindrical external shape.

11. Method according to one of the abovementioned claims, **characterized in that**, after the electrolyte body (10) together with the internal electrode (11) and the interconnector material (14) have been removed from the mold, the external electrode (12) is fitted, and is preferably subsequently burnt in.

## Revendications

1. Procédé pour la fabrication d'une pile à combustible SOFC (1) présentant un corps d'électrolyte (10) avec une structure tubulaire, au moins une électrode côté intérieur (11) et une électrode côté extérieur (12) étant appliquées sur le corps d'électrolyte tubulaire, le procédé comprenant au moins les étapes suivantes :
- mise à disposition d'un noyau de moulage par injection (13) sur lequel on applique au moins un matériau inter-connecteur (14) et l'électrode côté intérieur (11),
- mise en place du noyau de moulage par injection (13) dans un moule à injection (25a, 25b),
- moulage par injection d'une masse électrolytique (10a) pour la formation du corps d'électrolyte (10) et
- retrait du noyau de moulage par injection (13) à la manière d'un procédé de coulée avec noyau perdu.

2. Procédé selon la revendication 1, **caractérisé en ce que** le retrait du noyau de moulage par injection (13) est réalisé à l'aide d'un procédé thermique, et de préférence à l'aide d'une technique de noyau fusible.

3. Procédé selon les revendications 1 ou 2, **caractérisé en ce que** le noyau de moulage par injection (13) est formé par une matière plastique, le procédé thermique pour le retrait du noyau de moulage par injection (13) étant de préférence mis en oeuvre grâce à une combustion de la matière plastique.

4. Procédé selon l'une des revendications 1 à 3, **caractérisé en ce que** le noyau de moulage par injection (13) est réalisé avec un contour extérieur conique, de sorte qu'une première extrémité (15) est formée avec un grand diamètre et une deuxième extrémité (16) avec un petit diamètre du noyau de moulage par injection (13), la deuxième extrémité (16) avec le petit diamètre formant l'extrémité de réception du corps d'électrolyte tubulaire (10) sur un corps de base (17).

5. Procédé selon l'une des revendications précédentes, **caractérisé en ce que** le matériau inter-connecteur (14) et/ou l'électrode côté intérieur (11) sont appliqués à l'aide d'un procédé d'impression, en particulier à l'aide d'un procédé d'impression par presse rotative ou d'un procédé d'impression par sérigraphie, sur le noyau de moulage par injection (13).

6. Procédé selon l'une des revendications 1 à 4, **caractérisé en ce que** le matériau inter-connecteur (14) et/ou l'électrode côté intérieur (11) sont appliqués sur un film de support (20), lequel est disposé sur le noyau de moulage par injection (13) avant le moulage par injection de la masse électrolytique (10a), de sorte que la masse électrolytique (10a) se lie avec l'électrode côté intérieur (11) sur le film de support (20) lorsque la masse électrolytique (10a) est moulée par injection.

7. Procédé selon la revendication 6, **caractérisé en ce qu'**une application du matériau inter-connecteur (14) sur le film de support (20) s'effectue par couches (21) et **en ce que** l'électrode côté intérieur (11) est ensuite appliquée, les couches (21) de matériau inter-connecteur (14) s'étendant de préférence en direction longitudinale, plus ou moins loin sur la longueur du noyau de moulage par injection (13), et formant des zones inoccupées (22).

8. Procédé selon la revendication 7, **caractérisé en ce que** les zones inoccupées (22) sont remplies avec des couches de remplissage (23), en particulier avec des couches de carbone vitreux (23).

9. Procédé selon l'une des revendications précédentes, **caractérisé en ce que** le noyau de moulage par injection (13) présente des sillons (18) dans lesquels le matériau inter-connecteur (14) est introduit afin de former une couche d'inter-connecteur (14), laquelle présente une structure, de préférence une structure à entretoises (19) ou une structure grillagée.

10. Procédé selon l'une des revendications précédentes, **caractérisé en ce que** le matériau inter-connecteur (14) est appliqué avec une faible épaisseur dans la zone de la première extrémité (15) et avec une grande épaisseur dans la zone de la deuxième extrémité (16), de sorte que le matériau inter-connecteur (14) présente une forme intérieure conique et compense la forme conique du noyau de moulage par injection (13) de préférence d'une manière à ce que le matériau inter-connecteur (14) présente une forme extérieure à peu près cylindrique.

11. Procédé selon l'une des revendications précédentes, **caractérisé en ce que**, après le démoulage du corps d'électrolyte (10) avec l'électrode côté intérieur (11) et le matériau inter-connecteur (14), on applique l'électrode côté extérieur (12) en la cuisant ensuite de préférence.
